# EUROPÄISCHE PATENTSCHRIFT

(11) **EP 1 208 911 B1**
(45) Veröffentlichungstag und Bekanntmachung des Hinweises auf die Patenterteilung: **20.04.2005**
(21) Anmeldenummer: 01000645.0
(22) Anmeldetag: 20.11.2001
(51) Int. Cl.: B01L 3/02, G01N 35/10

(54) **Einrichtung zum Wechseln von Saugpipetten**
Device for replacing pipette tips
Dispositif pour changer des embouts de pipette

(30) Priorität: 22.11.2000 DE 10057787
(43) Veröffentlichungstag der Anmeldung: 29.05.2002
(73) Patentinhaber: SIEMENS AKTIENGESELLSCHAFT, 80333 München (DE)
(72) Erfinder: Andersch, Walter, 85551, Kirchheim (DE)

(56) Entgegenhaltungen:
- EP-A- 0 801 309
- DE-A- 3 934 156
- US-A- 5 620 661

## Beschreibung

Die vorliegende Erfindung betrifft eine Einrichtung zum Wechseln von Saugpipetten nach dem Oberbegriff des Patentanspruches 1.

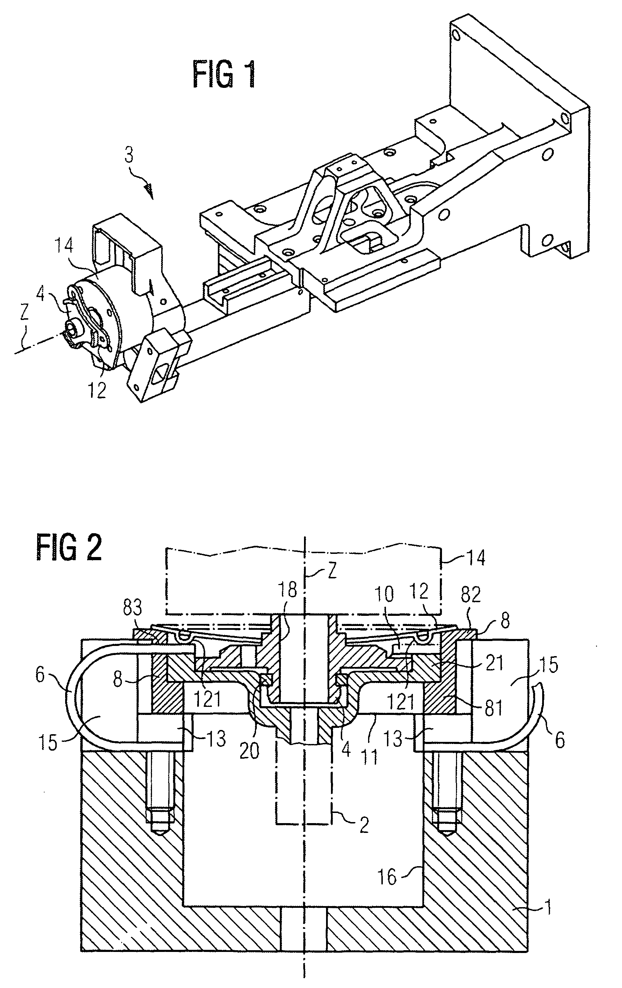

Es ist bekannt, Saugpipetten an einen Bestückkopf zum automatischen Bestücken von Leiterplatten mit Bauelementen nach der Entnahme aus einem Magazin anzukoppeln und umgekehrt vom Bestückkopf nach einer Bestückoperation in das Magazin zurückzugeben. Dabei werden die in dem Magazin bereit gestellten Pipetten von einer Pinole aufgenommen, indem ein sternförmiges Teil der Pinole durch Verdrehen formschlüssig mit der Pipettenschnittstelle verbunden und mit einem Rastblech gesichert wird. Dieser Vorgang wird im Zusammenhang mit der Figur 1, in der ein Bestückkopf mit 3 bezeichnet ist, näher erläutert. Dabei ist ein Drehmotor des Bestückkopfes 3 mit 14 bezeichnet. Auf der Abtriebsachse des Drehmotors 14 sind zueinander ausgerichtet ein sternförmiges Rastblech 12 und ein Sternteil 4 angeordnet.

Beim Ankoppeln einer Pipette wird das Sternteil, das einen Längsdurchgang 18 aufweist, in eine ihm zugewandte sternförmige Aussparung der in einem Magazin gehaltenen Pipette unter Ausübung eines Druckes in Richtung auf die Pipette (Z-Achse) eingesetzt, wobei sich die genannte sternförmige Aussparung in der dem Bestückkopf zugewandten Fläche der Pipette befindet. Durch Drehen des Sternteiles 4 in der Umfangsrichtung der im Magazin festgehaltenen Pipette wird das Sternteil 4 bajonettartig an der Pipette verriegelt, wobei Außenränder der Vorsprünge des Sternteiles unter die genannte sternförmige Aussparung in der Umfangsrichtung übergreifende Wandteile gelangen. Dies entspricht der Verriegelungspositon zwischen dem Sternteil 4 und der Pipette. Das am Sternteil 4 deckungsgleich befestigte sternförmige, federnde Rastblech weist einen der Pipette zugewandten Vorsprung bzw. eine Noppe auf, die beim Verdrehen des Sternteiles 4 zusammen mit dem Rastblech in die Verriegelungsposition auf einem Kreisbogen außerhalb der sternförmigen Aussparung der Pipette gleitet, bis sie in der Verriegelungsposition in eine Kerbe eintritt, die sich an dem genannten Kreisbogen befindet. Dadurch wird erreicht, dass die Verriegelungsposition aufrecht erhalten bleibt. Eine ringförmige Dichtung, die am Sternteil vorgesehen ist, sorgt für eine dichte Verbindung zwischen der genannten Bohrung des Sternteiles 4 und der Pipette, so dass über die Bohrung des Sternteiles 4 ein Vakuum an die Pipette angelegt werden kann.

Ein Problem einer solchen Verriegelung zwischen dem Sternteil und der Pipette besteht dabei darin, dass die zum Lösen des Sternteiles von der Pipette beim Absetzten derselben in dem Magazin aufzubringende Kraft, die erforderlich ist, um die Rastkraft der Noppe des Rastbleches zu überwinden, um die Noppe in Umfangsrichtung aus der Kerbe zu bewegen, auch dann relativ groß ist, wenn die Kerbe schräge Flächen besitzt. Das zum Verdrehen des Sternteiles in Bezug auf die Pipette erforderliche Moment muß daher relativ groß sein. Umgekehrt wird bei der Vorgabe eines bestimmten minimalen Momentes die Haltekraft durch dieses Moment begrenzt. Ein weiterer Nachteil besteht darin, dass der Verschleiß an Kerbe und Noppe relativ groß ist, so dass die Lebensdauer insbesondere der Pipetten begrenzt ist.

Die Aufgabe der vorliegenden Erfindung besteht darin, eine Einrichtung zu schaffen, mit der ein Wechsel von Saugpipetten an einem Bestückkopf bei vergleichsweise geringen Ein- und Auskuppelmomenten relativ sicher ausgeführt werden kann.

Diese Aufgabe wird durch eine Einrichtung zum Wechsel von Saugpipetten mit den Merkmalen des Patentanspruches 1 gelöst.

Der wesentliche Vorteil der vorliegenden Erfindung besteht darin, dass zum Verdrehen des Sternteiles in die Verriegelungsposition beim Aufnehmen einer Pipette aus einem Magazin ein relativ kleines Moment ausreicht, da das Rastblech nicht wie beim Stand der Technik auf der Pipette selbst sondern auf einem speziellen Gleitring mit einem niedrigen Reibungskoeffizienten gleitet. Beim Ein- und Ausrasten muß die Noppe des sternförmigen Rastbleches nicht in der Umfangsrichtung die Schrägen der Kerbe der Pipette überwinden, weil die auf dem Gleitring mit dem geringen Reibungskoeffizient gleitende Noppe nach dem Erreichen der Verriegelungspositon beim Entlasten des Rastbleches vom Gleitring aus in der Z-Achse von oben her sanft in die Kerbe eingesetzt wird. Umgekehrt wird die Noppe beim Einsetzen der Pipette in ein Magazin beim Nachuntendrücken des Rastbleches in der Z-Achse nach oben aus der Kerbe herausbewegt, weil das Rastblech auf dem Gleitring zur Auflage gelangt. Dadurch können vorteilhafterweise die beim Ein- und Ausrasten der Noppe auftretenden Momente bis zum Faktor 6 reduziert werden.

Vorteilhafter Weise kann die zwischen Pipette und Sternteil bestehende Haltekraft durch eine größere Vorspannung des Rastblechs erhöht werden. Außerdem kommt es gemäß einem weiteren wesentlichen Vorteil der Erfindung im Bereich der Kerbe zu keinem Verschleiß.

Durch die niedrigen Ein- und Auskupplungsmomente kann vorteilhafter Weise ein drehmomentschwächerer und damit leichterer Motor eingesetzt werden. Dies ist von großer Bedeutung, da das Sternteil und das Rastblech sowie die in der Verriegelungsposition damit verbundene Pipette direkt auf der Achse des Motors sitzen und der Motor daher direkt in der Richtung der Z- Achse beim Bestücken beschleunigt werden muß. Um beim Aufsetzen von Bauelementen auf einer Leiterplatte kleine Aufsetzkräfte zu realisieren, muß daher das Gewicht des Motors klein sein. Durch die Erfindung kann eine niedrigst erforderliche Aufsetzkraft von beispielsweise 0,5 N mit einer höheren Bestückgeschwindigkeit erreicht werden.

Vorteilhafterweise ist die vorliegende Einrichtung so ausgestaltet, dass sie auch im Zusammenhang mit bereits bekannten Pipetten verwendet werden kann. Eine Neugestaltung der Pipetten ist daher nicht erforderlich.

Vorteilhafte Ausgestaltungen der Erfindung gehen aus den Unteransprüchen hervor.

Im folgenden werden die Erfindungen und deren Ausgestaltungen im Zusammenhang mit den Figuren näher erläutert. Es zeigen:
- Figur 1: in perspektivischer Darstellung einen bekannten Bestückkopf mit Mitteln zum Wechseln von Saugpipetten;
- Figur 2: einen Schnitt durch eine erfindungsgemäße Einrichtung, wobei das Sternteil in der Verriegelungsposition angeordnet ist;
- Figur 3: eine Aufsicht von oben auf ein Magazin;
- Figur 4: eine Aufsicht von oben des auf dem Gleitring aufsitzenden Rastbleches;
- Figur 5: einen Schnitt durch eine Pipette und
- Figur 6: eine Ansicht der Pipette von der Seite des Bestückkopfes aus.

In der Figur 2 ist ein Magazin, in dem eine Pipette 2 angeordnet ist, mit 1 bezeichnet. Von entscheidender Bedeutung ist es, dass bei der vorliegenden Einrichtung ein Gleitring 8 in dem Magazin 1 angeordnet ist, in den die Pipette 2 einsetzbar ist. Zu diesem Zweck weist der Gleitring 8 vorzugsweise einen unteren radial nach innen ragenden Flansch 81 auf, auf dem der Außenrand 21 der Pipette 2 aufliegt. Der Gleitring 8 besitzt ferner vorzugsweise einen oberen, radial nach außen ragenden Flansch 82, der auf der Oberseite des Magazins 1 aufliegt. Zweckmäßigerweise besitzt das Magazin 1 die Form eines quadratischen Gehäuses mit einen Raum 16, der zur Aufnahme des unteren Bereiches der Pipette 2 dient. Der Innenraum 16 erweitert sich nach außen über eine Stufe 11, auf der der untere Flansch 81 des Gleitringes 8 aufliegt. In zwei an diametralen Seiten vorgesehenen radialen Einschnitten 15 des Magazins 1 ist jeweils eine Rückhaltefeder 6 angeordnet, die etwa U-förmig ausgebildet ist, und deren unterer Schenkel insbesondere mit der Hilfe des Kopfes einer Schraube 13 am Boden des Einschnittes 15 unterhalb der Stufe 11 befestigt ist. Ausgehend von dem im Einschnitt 15 radial nach außen verlaufenden unteren Schenkel verläuft die Rückhaltefeder 6 bogenförmig zu einem in dem Einschnitt 15 radial nach innen verlaufenden oberen Schenkel, dessen freier Endbereich durch eine radiale Aussparung 83 des Gleitringes 8 geführt ist. Dabei zieht die Rückhaltefeder 6 aufgrund ihrer Federkraft den Gleitring 8 in Richtung auf die Stufe 11.

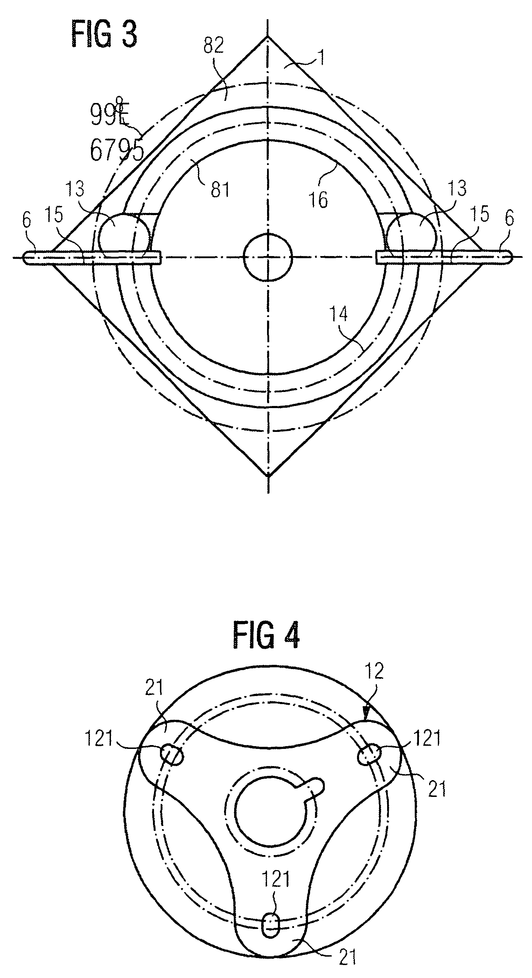

In der Figur 3 sind der Gleitring 8 und die Flasche 81, 82 von oben gesehen durch strichpunktierte Linien dargestellt.

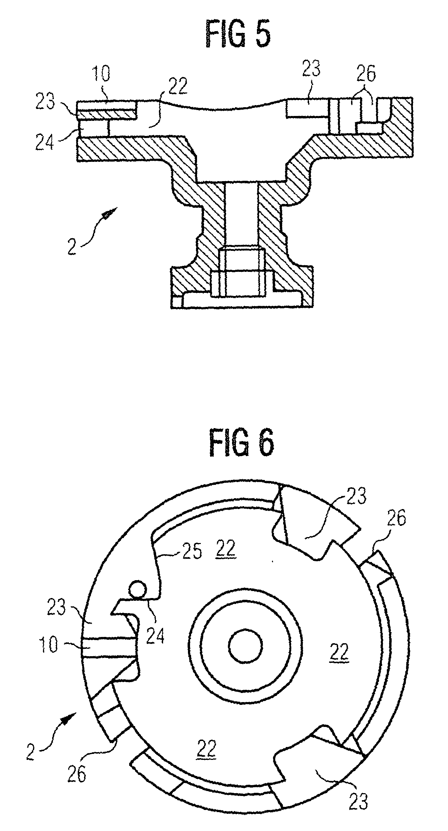

Das sternförmige Einrastblech 12, das vorzugsweise aus Federstahl besteht, weist an einem sternförmig nach außen ragenden Vorsprung eine in Richtung zum Gleitring 8 vorstehende Noppe 121 auf, die in einer Verriegelungsposition in die Kerbe 10 einrastet, die sich in der dem Rastblech 12 zugewandten Fläche der Pipette 2 befindet. Die Ansicht der Pipette 2 von der Seite des Motors 14 her ist in der Figur 6 dargestellt. Die Figur 5 zeigt einen Schnitt durch die Pipette 2. Die sternförmige Aussparung zur Aufnahme des Sternteiles 4 ist mit 22 und die eingangs genannten Wandteile sind mit 23 bezeichnet. In einem Wandteil 23 (in den Figuren 5 und 6 in dem linken Wandteil 23) befindet sich an der dem Sternteil 4 zugewandten Seite die radial verlaufende Kerbe 10. An der in der Drehrichtung zur Verriegelungsposition gesehenen hinteren Seiten eines Wandteiles 23 befindet sich ein Anschlag 24 für die entsprechende Kante der Vorsprünge des Sternteiles 4 zur Festlegung der Verriegelungsposition.

Damit die Pipette 2 in den Gleitring 8 eingesetzt bzw. aus diesem entfernt werden kann, weist sie sich diametral gegenüberliegende, außenseitige Einschnitte 26 auf, durch die beim Einsetzen der Pipette 2 in den Gleitring 4 bzw. beim Herausnehmen der Pipette 2 aus dem Gleitring 4 die radial nach innen über den Gleitring 4 vorstehenden Enden der oberen Schenkel der Rückhaltefedern 6 hindurchtreten können.

Das Rastblech 12 ist so bemessen, dass es nach außen über den Umfang einer aufzunehmenden Pipette 2 hinausragt und daher beim Einfahren des Sternteiles 4 in die sternförmige Ausnehmung 22 auf dem oberen Flansch 82 des Gleitringes 8 zur Auflage gelangt und gegen seine Federkraft in der Z-Achse soweit angehoben wird, dass sich die Noppe 121 oberhalb der Ebene der Fläche der Pipette 2 befindet, in der die Kerbe 10 angeordnet ist. Dadurch wird erreicht, dass beim Verdrehen des Sternteiles 4 und des Rastbleches 12 (in Figur 6 im Uhrzeigersinn) das Rastblech 12 mit seinen Außenrändern 21 auf dem Gleitring 8 gleitet, bis sich die Noppe 121 in der Verriegelungsposition oberhalb der Kerbe 10 befindet. Beim Anheben der Pinole 2 und des Sternteiles 4 entspannt sich das federnd vorgespannte Rastblech 12 und fährt die Noppe 121 von in der Z-Achse oben in die Kerbe 10 ein.

Um ein besonders reibungsfreies Verdrehen des Rastbleches 12 auf dem Gleitring 8 zu ermöglichen, wird der Gleitring 8 vorzugsweise aus einem gut gleitfähigen Kunststoffmaterial, das einem sehr niedrigen Reibungskoeffizeinetn besitzt, gefertigt. Alternativ oder zusätzlich kann das Rastblech 12 zumindest in seinen auf dem Gleitring 8 aufliegenden Bereichen mit einem Material eines geringen Reibungskoeffizienten beschichtet sein. Zum Verdrehen des Sternteiles 4 und des Rastbleches 12 reicht daher ein niedriges Moment aus, da das Rastblech 12, nicht wie beim eingangs geschilderten Stand der Technik, auf der Pipette selbst mit einer relativ großen Reibung, sondern auf dem Gleitring 8 mit einem niedrigen Reibungskoeffizienten gleitet. Da die Noppe 121 beim Ein- und Ausrasten eine senkrechte Bewegung ausführt, muß sie nicht, wie beim Stand der Technik erforderlich, die Schrägen der Kerbe überwinden.

Beim Absetzen der Pipette 2 in dem Gleitring 8 eines Magazins 1 (wobei die freien Enden der oberen Schenkel der Rückhaltefedern 6 in die Einschnitte 26 eintreten) gelangt das Rastblech 12 wieder auf dem Flansch 82 des Gleitringes 8 zur Auflage und wird dabei die Noppe 121 aus der Kerbe 10 nach oben in der Z-Achse heraus gehoben, wobei das Rastblech 12 gegen seine Federkraft vorgespannt wird. Beim nachfolgenden Drehen des Sternteiles 4 und des Rastbleches 12 aus der Verriegelungsposition (Drehung in Figur 6 entgegen den Uhrzeigersinn) gleitet das Rastblech 12 wieder reibungsarm auf dem Gleitring 8, bis das Sternteil 4 aus dem Bereich der Wandteile 23 herausgelangt und in Richtung der Z-Achse vom Magazin 1 wegbewegt werden kann, wenn die Enden der oberen Schenkel der Rückhaltefedern 6 zu den Einschnitten 26 ausgerichtet sind.

## Patentansprüche

1. Einrichtung zum Wechseln von Saugpipetten, die aus einem Magazin (1) entnehmbar und an einem Bestückkopf (3) einer Einrichtung zum Bestücken ankoppelbar und vom Bestückkopf (3) lösbar und in dem Magazin (1) absetzbar sind, wobei der Bestückkopf (3) an seiner, dem Magazin (1) zugewandten Seite einen Motor (14) aufweist, auf dessen Abtriebsachse ein Sternteil (4) und ein Rastblech (12) montiert sind, wobei das Rastblech (12) wenigstens eine Noppe (121) aufweist, die nach dem Einsetzen des Sternteiles (4) in eine sternförmige Aussparung (22) der in dem Magazin (1) gehaltenen Saugpipette (2) und dem Drehen des Sternteiles (4) und des Rastbleches (12) in eine Verriegelungsposition in eine Kerbe (10) eingreift, die sich in der dem Bestückkopf (3) zugewandten Fläche der Saugpipette (2) befindet, und die beim Einsetzen einer am Sternteil (4) gehaltenen Saugpipette (2) in das Magazin (1) aus der Kerbe (10) herausbewegbar ist, **dadurch gekennzeichnet, dass** das Magazin (1) an der dem Bestückkopf (3) zugewandten Seite einen drehfest im Magazin (1) angeordneten Gleitring (8) aufweist, in den die Saugpipette (2) einsetzbar ist, derart, dass das sternförmige Rastblech (12) mit seinen Außenrändern (21) auf dem Gleitring (8) zur Auflage gelangt, wobei es federnd vom Sternteil (4) weggehoben wird, sodass die Noppe (121) sich oberhalb der dem Bestückkopf (3) zugewandten Fläche der Saugpipette (2) befindet und nach dem Verdrehen des Sternteiles (4) und des Rastbleches (12) in die Verriegelungsposition und dem Entnehmen der Saugpipette (2) aus dem Gleitring (8) von oben her bei der Entspannung des Rastbleches (12) in die Kerbe (10) eintritt und beim Einfahren des Sternteiles (4) in den Gleitring (8) durch Vorspannen und Anheben des Rastbleches (12) aus der Kerbe (10) nach oben herausgehoben wird.

2. Einrichtung nach Anspruch 1, **dadurch gekennzeichnet, dass** das Magazin (1) an seiner dem Bestückkopf (3) zugewandten Seite eine Stufe (11) zur Auflage eines unteren Flansches (81) des Gleitringes (8) aufweist, der einen oberen Flansch (82) zur Anlage der Außenränder (21) besitzt, der auf dem Randbereich einer den Gleitring (8) aufnehmenden Aussparung des Magazins (1) aufliegt.

3. Einrichtung nach Anspruch 1 oder 2, **dadurch gekennzeichnet, dass** der Gleitring (8) aus einem Kunststoffmaterial mit einem niedrigen Reibungskoeffizienten besteht.

4. Einrichtung nach einem der Ansprüche 1 bis 3, **dadurch gekennzeichnet, dass** das Rastblech (12) zumindest in seinen auf dem Gleitring (8) aufliegenden Bereichen mit einem Material eines geringen Reibungskoeffizienten beschichtet ist.

5. Einrichtung nach einem der Ansprüche 1 bis 4, **dadurch gekennzeichnet, dass** das Rastblech aus Federstahl besteht.

6. Einrichtung nach einem der Ansprüche 1 bis 5, **dadurch gekennzeichnet, dass** der Gleitring (8) mit wenigstens einer Rückhaltefeder (6) am Magazin (1) befestigt ist.

7. Einrichtung nach Anspruch 6, **dadurch gekennzeichnet, dass** die Rückhaltefeder (6) U-förmig ausgebildet ist und einen am Magazin (1) gehaltenen ersten Schenkel aufweist, der sich radial nach außen erstreckt und bogenförmig zur Seite des Bestückkopfes (3) verläuft und in einen oberhalb des ersten Schenkels radial nach innen verlaufenden zweiten Schenkel übergeht, der durch einen radial verlaufenden Einschnitt (15) des Magazins (1) geführt ist und dessen freier Endbereich durch eine Aussparung (83) des Gleitringes (8) geführt ist.

8. Einrichtung nach Anspruch 7, **dadurch gekennzeichnet, dass** das freie Ende des oberen Schenkels innenseitig über den Gleitring (8) vorsteht und beim Einsetzen der Saugpipette (2) in das Magazin (1) sowie bei der Entnahme der Saugpipette (2) aus dem Magazin (1) durch einen Einschnitt (26) der Saugpipette (2) hindurchführbar ist.

9. Einrichtung nach einem der Ansprüche 6 bis 8, **dadurch gekennzeichnet, dass** im Magazin (1) sich diametral gegenüberliegend zwei Rückhaltefedern (6) vorgesehen sind.

10. Einrichtung nach einem der Ansprüche 1 bis 9, **dadurch gekennzeichnet, dass** die Saugpipette (2) zur bajonettartigen Verriegelung des Sternteiles (4) an der Saugpipette (2) Wandteile (23) aufweist, die oberhalb der sternförmigen Aussparung (22) radial nach innen ragen und unter die beim Verdrehen des Sternteiles (4) in die Verriegelungsposition die Vorsprünge des Sternteiles (4) gelangen, und dass sich in der dem Bestückkopf (3) zugewandten Fläche eines Wandteiles (23) die Kerbe (10) befindet.

11. Einrichtung nach Anspruch 10, **dadurch gekennzeichnet, dass** die Saugpipette (2) einen die Drehbewegung des Sternteiles (4) in die Verriegelungsposition begrenzenden Anschlag (24) aufweist.

12. Einrichtung nach Anspruch 10 oder 11, **dadurch gekennzeichnet, dass** die Saugpipette (2) einen weiteren Anschlag (25) aufweist, der die Drehbewegung des Sternteiles (4) aus der Verriegelungsposition in einer Position beendet, in der die Rückhaltefedern (6) zu den Schlitzen (26) der Saugpipette (2) ausgerichtet sind.

## Claims

1. Device for interchanging suction pipettes which can be removed from a magazine (1) and coupled to a fitting head (3) of a fitting device and detached from the fitting head (3) and deposited in the magazine (1), the fitting head (3) having, on its side which faces the magazine (1), a motor (14) on whose driven shaft a star-shaped part (4) and a latching plate (12) are mounted, the latching plate (12) having at least one nub (121) which, after insertion of the star-shaped part (4) into a star-shaped cutout (22) in the suction pipette (2) held in the magazine (1) and after rotation of the star-shaped part (4) and the latching plate (12) into a locking position, engages in a notch (10), which is situated in that surface of the suction pipette (2) which faces the fitting head (3), and which nub, on insertion of a suction pipette (2) held on the star-shaped part (4) into the magazine (1), can be moved out of the notch (10), **characterized in that** the magazine (1) has, on the side facing the fitting head (3), a sliding ring (8) which is arranged in a rotationally fixed manner in the magazine (1) and into which the suction pipette (2) can be inserted in such a manner that the star-shaped latching plate (12) comes to rest with its outer edges (21) on the sliding ring (8) where it is raised resiliently away from the star-shaped part (4), so that the nub (121) is situated above that surface of the suction pipette (2) which faces the fitting head (3) and, after rotation of the star-shaped part (4) and the latching plate (12) into the locking position and after removal of the suction pipette (2) from the sliding ring (8), enters from above, when the latching plate (12) is relaxed, into the notch (10) and, when the star-shaped part (4) enters into the sliding ring (8), is raised, by prestressing and raising of the latching plate (12), upwards out of the notch (10).

2. Device according to Claim 1, **characterized in that**
the magazine (1) has, on its side facing the fitting head (3), a step (11) for the support of a lower flange (81) of the sliding ring (8) which has an upper flange (82) for the bearing of the outer edges (21), which flange rests on the edge region of a cutout in the magazine (1), said cutout accommodating the sliding ring (8).

3. Device according to Claim 1 or 2, **characterized in that** the sliding ring (8) consists of a plastic material having a low coefficient of friction.

4. Device according to one of Claims 1 to 3, **characterized in that** the latching plate (12) is coated, at least in its regions resting on the sliding ring (8), with a material of a small coefficient of friction.

5. Device according to one of Claims 1 to 4, **characterized in that** the latching plate consists of spring steel.

6. Device according to one of Claims 1 to 5, **characterized in that** the sliding ring (8) is fastened to the magazine (1) by at least one retaining spring (6).

7. Device according to Claim 6, **characterized in that** the retaining spring (6) is of U-shaped design and has a first leg which is held on the magazine (1), extends radially outwards and runs in a curved manner with respect to the side of the fitting head (3) and merges into a second leg which runs radially inwards above the first leg, is guided through a radially extending incision (15) in the magazine (1) and whose free end region is guided through a cutout (83) in the sliding ring (8).

8. Device according to Claim 7, **characterized in that** the free end of the upper leg projects on the inside over the sliding ring (8) and, on insertion of the suction pipette (2) into the magazine (1) and on removal of the suction pipette (2) from the magazine (1), can be passed through an incision (26) in the suction pipette (2).

9. Device according to one of Claims 6 to 8, **characterized in that** two retaining springs (6) are provided diametrically opposite each other in the magazine (1).

10. Device according to one of Claims 1 to 9, **characterized in that** the suction pipette (2) has, for the bayonet-like locking of the star-shaped part (4) to the suction pipette (2), wall parts (23) which protrude radially inwards above the star-shaped cutout (22) and under which the projections of the star-shaped part (4) pass, on rotation of the star-shaped part (4) into the locking position, and **in that** the notch (10) is situated **in that** surface of a wall part (23) which faces the fitting head (3).

11. Device according to Claim 10, **characterized in that** the suction pipette (2) has a stop (24) restricting the rotational movement of the star-shaped part (4) into the locking position.

12. Device according to Claim 10 or 11, **characterized in that** the suction pipette (2) has a further stop (25) which ends the rotational movement of the star-shaped part (4) out of the locking position in a position in which the retaining springs (6) are aligned with respect to the slots (26) in the suction pipette (2).

## Revendications

1. Dispositif pour changer des pipettes d'aspiration qui peuvent être enlevées d'un magasin (1) et être accouplées sur une tête de montage (3) d'un dispositif de montage ou être libérées de la tête de montage (3) et être déposées dans le magasin (1), la tête de montage (3) présentant sur son côté tourné vers le magasin (1) un moteur (14) qui porte sur son arbre primaire une pièce en étoile (4) et une tôle d'enclenchement (12), la tôle d'enclenchement (12) présentant au moins une bosse (121) qui, après l'insertion de la pièce en étoile (4) dans une échancrure en étoile (22) de la pipette d'aspiration (2) maintenue dans le magasin (1) et la rotation de la pièce en étoile (4) et de la tôle d'enclenchement (12) dans une position de verrouillage, s'engage dans une encoche (10) qui se trouve dans la surface de la pipette d'aspiration (2) tournée vers la tête de montage (3), et qui, lors de l'insertion dans le magasin (1) d'une pipette d'aspiration (2) maintenue sur la pièce en étoile (4), peut être désengagée de l'encoche (10), **caractérisé en ce que** sur son côté tourné vers la tête de montage (3), le magasin (1) présente une bague de glissement (8) disposée dans le magasin (1) de manière à ne pas pouvoir tourner par rapport à celui-ci et dans laquelle la pipette d'aspiration (2) peut être insérée, de telle sorte que la tôle d'enclenchement (12) en forme d'étoile vient se placer par ses bords extérieurs (21) sur la bague de glissement (8) tout en étant écartée élastiquement de la pièce en étoile (4), de telle sorte que la bosse (121) se trouve au-dessus de la surface de la pipette d'aspiration (2) tournée vers la tête de montage (3), et qu'après la rotation de la pièce en étoile (4) et de la tôle d'enclenchement (12) dans la position de verrouillage et l'enlèvement de la pipette d'aspiration (2) hors de la bague de glissement (8) depuis le haut lors de la détente de la tôle d'enclenchement (12), elle pénètre dans l'encoche (10), et que lors de la pénétration de la pièce en étoile (4) dans la bague de glissement (8) par précontrainte et relèvement de la tôle d'enclenchement (12), elle est désengagée de l'encoche (10) vers le haut.

2. Dispositif selon la revendication 1, **caractérisé en ce que** sur son côté tourné vers la tête de montage (3), le magasin (1) présente un épaulement (11) pour le support d'un collet inférieur (81) de la bague de glissement (8) qui possède un collet supérieur (82) pour l'appui des bords extérieurs (21) et qui repose sur la zone de bordure d'une échancrure du magasin (1) qui loge la bague de glissement (8).

3. Dispositif selon la revendication 1 ou 2, **caractérisé en ce que** la bague de glissement (8) est constituée d'une matière synthétique à faible coefficient de frottement.

4. Dispositif selon l'une des revendications 1 à 3, **caractérisé en ce qu'**au moins dans ses zones qui reposent sur la bague de glissement (8), la tôle d'enclenchement (12) est revêtue d'un matériau à faible coefficient de frottement.

5. Dispositif selon l'une des revendications 1 à 4, **caractérisé en ce que** la tôle d'enclenchement (12) est constituée d'acier à ressort.

6. Dispositif selon l'une des revendications 1 à 5, **caractérisé en ce que** la bague de glissement (8) est fixée sur le magasin (1) par au moins un ressort de rappel (6).

7. Dispositif selon la revendication 6, **caractérisé en ce que** le ressort de rappel (6) est configuré en forme de U et présente une première aile qui est maintenue sur le magasin (1), qui s'étend radialement vers l'extérieur, qui se prolonge en arc de cercle vers le côté de la tête de montage (3) et qui se transforme en une deuxième aile s'étendant radialement vers t'intérieur au-dessus de la première aile, qui est guidée par une incision (15) du magasin (1) s'étendant radialement et dont la zone d'extrémité libre est guidée par une échancrure (83) de la bague de glissement (8).

8. Dispositif selon la revendication 7, **caractérisé en ce que** l'extrémité libre de l'aile supérieure s'étend du côté intérieur au-dessus de la bague de glissement (8) et, lors de l'insertion de la pipette d'aspiration (2) dans le magasin (1) ainsi que lors de l'enlèvement de la pipette d'aspiration (2) hors du magasin (1), peut traverser une incision (26) de la pipette d'aspiration (2).

9. Dispositif selon l'une des revendications 6 à 8, **caractérisé en ce que** deux ressorts de rappel (6) diamétralement opposés sont prévus dans le magasin (1).

10. Dispositif selon l'une des revendications 1 à 9, **caractérisé en ce que** pour un verrouillage de type à baïonnette de la pièce en étoile (4) sur la pipette d'aspiration (2), la pipette d'aspiration (2) présente des parties de paroi (23) qui s'étendent radialement vers l'intérieur au-dessus de l'échancrure (22) en forme d'étoile et en dessous desquelles les saillies de la pièce en étoile (4) viennent se placer lorsque la pièce en étoile (4) est tournée dans la position de verrouillage et **en ce que** l'encoche (10) se trouve dans la surface d'une partie de paroi (23) qui est tournée vers la tête de montage (3).

11. Dispositif selon la revendication 10, **caractérisé en ce que** la pipette d'aspiration (2) présente une butée (24) qui limite le mouvement de rotation de la pièce en étoile (4) jusque dans la position de verrouillage.

12. Dispositif selon la revendication 10 ou 11, **caractérisé en ce que** la pipette d'aspiration (2) présente une autre butée (25) qui arrête le mouvement de rotation de la pièce en étoile (4) hors de la position de verrouillage dans une position dans laquelle les ressorts de rappel (6) sont alignés avec les incisions (26) de la pipette d'aspiration (2).
